# FASCICULE DE BREVET EUROPEEN

(11) **EP 3 394 408 B1**
(45) Date de publication et mention de la délivrance du brevet: **17.06.2020**
(21) Numéro de dépôt: 16826105.5
(22) Date de dépôt: 15.12.2016
(51) Int. Cl.: F02C 7/36, F02C 7/32

(54) **MÉCANISME DE TRANSMISSION COMPRENANT UN ORGANE D'ACCOUPLEMENT, TURBOMACHINE ÉQUIPÉE D'UN TEL MÉCANISME ET PROCÉDÉ DE FONCTIONNEMENT DUDIT MÉCANISME**
GETRIEBEMECHANISMUS MIT EINEM KOPPLUNGSELEMENT, MIT SOLCH EINEM MECHANISMUS AUSGESTATTETE TURBOMASCHINE UND BETRIEBSVERFAHREN DES BESAGTEN MECHANISMUS
TRANSMISSION MECHANISM COMPRISING A COUPLING MEMBER, TURBOMACHINE EQUIPPED WITH SUCH A MECHANISM AND OPERATING METHOD OF SAID MECHANISM

(30) Priorité: 21.12.2015 FR 1562962
(43) Date de publication de la demande: 31.10.2018
(73) Titulaire: Safran Transmission Systems, 92700 Colombes (FR)
(72) Inventeur: BAUDUIN, Lionel, 77550 Moissy-Cramayel (FR); LECURU, Julian, 77550 Moissy-Cramayel (FR); GUILLEMONT, Maxence, 77550 Moissy-Cramayel (FR)
(74) Mandataire: Gevers & Orès
(86) Numéro de dépôt international: PCT/FR2016/053472
(87) Numéro de publication internationale: WO 2017/109342

(56) Documents cités:
- FR-A1- 2 921 423
- FR-A1- 2 952 677
- US-A1- 2009 224 728

## Description

### 1. Domaine de l'invention

La présente invention concerne le domaine des turbomachines, notamment des turbomachines pour aéronefs. Elle vise en particulier, une turbomachine comprenant une machine électrique réversible intégrant la fonction de démarreur et de générateur. Elle concerne également un procédé de fonctionnement de cette machine électrique réversible.

### 2. Etat de la technique

FR2952677 divulgue un mécanisme de transmission de puissance pour une turbomachine comprenant :
- un réducteur comprenant un premier et un deuxième engrenages à rapports de réduction différents et comportant chacun une première roue dentée montée sur un même premier axe et une seconde roue dentée montée sur un même second axe, les premières roues dentées étant montées libres en rotation sur le premier axe et étant munies chacune de saillies d'engrènement sur un côté de celles-ci ; et,
- un organe d'accouplement comprenant un corps annulaire d'axe de révolution lequel comporte des première et deuxième rangées de dents d'accouplement, les dents d'accouplement des première et deuxième rangées sont respectivement orientées suivant des première et deuxième directions opposées et sensiblement parallèles, l'organe d'accouplement étant monté solidaire en rotation sur le premier axe et coulissant axialement sur ledit premier axe de manière à occuper au moins deux positions axiales d'engrènement prédéterminées où les dents d'accouplement engrènent les saillies d'engrènement de l'une des premières roues dentées rendue alors solidaire en rotation avec le premier axe.

Une turbomachine comprend de manière générale un arbre de transmission de puissance qui transmet sa puissance via une boîte d'engrenage à divers accessoires pour leur fonctionnement ainsi que celui de la turbomachine, ces accessoires pouvant être des pompes de carburant et de lubrification, des générateurs électriques, des démarreurs, etc. Les démarreurs et générateurs électriques sont habituellement des accessoires distincts qui ont respectivement pour fonction le démarrage de la turbomachine et la production d'énergie électrique des divers accessoires et équipements. Il existe des machines électriques intégrant ces deux fonctions. Toutefois, ces machines sont aptes à fournir une forte puissance mais seulement à partir d'une certaine vitesse et supportent assez mal les forts couples à basses vitesses. En particulier, lorsque la machine électrique est utilisée en tant que démarreur, un fort rapport de réduction est nécessaire afin que le couple soit faible et la vitesse élevée pour que le démarreur soit dans son domaine de fonctionnement privilégié. De même, lorsque la machine électrique est utilisée en tant que génératrice électrique, le fort rapport de réduction pour le démarrage implique que la génératrice tourne beaucoup trop vite dans les phases de vol à haute vitesse (par exemple au décollage). Un exemple de machine électrique est décrit dans le document FR-A1-2 952 677.

### 3. Objectif de l'invention

Le présent déposant s'est donc fixé comme objectif de mettre au point une solution simple qui permette de réaliser automatiquement et de manière autonome la fonction de démarreur et de générateur électrique.

### 4. Exposé de l'invention

On parvient à cet objectif conformément à l'invention grâce à un mécanisme de transmission de puissance pour une turbomachine, le mécanisme comprenant:
- un réducteur comprenant un premier et un deuxième engrenages à rapports de réduction différents et comportant chacun une première roue dentée montée sur un même premier axe et une seconde roue dentée montée sur un même second axe, les premières roues dentées étant montées libres en rotation sur le premier axe et étant munies chacune de saillies d'engrènement hélicoïdales sur un côté de celles-ci ; et,
- un organe d'accouplement comprenant un corps annulaire d'axe de révolution lequel comporte des première et deuxième rangées de dents d'accouplement hélicoïdales, les dents d'accouplement hélicoïdales des première et deuxième rangées étant respectivement orientées suivant des première et deuxième directions opposées et sensiblement parallèles,
l'organe d'accouplement étant monté solidaire en rotation sur le premier axe et coulissant axialement sur ledit premier axe de manière à occuper au moins deux positions axiales d'engrènement prédéterminées où les dents d'accouplement engrènent les saillies d'engrènement complémentaires de l'une des premières roues dentées rendue alors solidaire en rotation avec le premier axe, les dents d'accouplement hélicoïdales et les saillies d'engrènement hélicoïdales étant configurées pour former un contact surfacique dans chaque position axiale, les saillies d'engrènement hélicoïdales comprenant des première et deuxième surfaces opposées et avec des inclinaisons respectivement identiques à celles des premières et deuxième surfaces opposées des dents d'accouplement hélicoïdales en regard l'une de l'autre.

Ce mécanisme de transmission de puissance permet de résoudre les inconvénients précités. En effet, l'utilisation d'un organe d'accouplement de configuration simple avec un réducteur à rapport de réduction différent permet d'adapter la transmission de puissance pour chaque engrenage de manière fiable. En particulier, l'organe d'accouplement permet à la machine électrique dans laquelle celui-ci est agencé de passer de la fonction démarreur à la fonction génératrice d'électrique de manière simple. Les dents d'accouplement hélicoïdales et les saillies d'engrènement facilitent le passage dans l'un ou l'autre des modes de fonctionnement grâce à une résultante axiale induite par celles-ci. Par ailleurs, un tel organe est économique à réaliser, peu encombrant, et n'influe pas sur la masse de la turbomachine. A cela s'ajoute le fait que les dents et saillies hélicoïdales peuvent supporter de forts couples et permettent d'éviter l'usure prématurée des dents et saillies en évitant les chocs par exemple, ce qui allonge la durée de vie du mécanisme.

Dans la présente demande, nous entendons par « dent hélicoïdale », des dents qui ont une orientation générale hélicoïdale autour d'un axe commun. Chaque dent comprend par exemple une forme allongée dans l'axe d'allongement à une orientation générale hélicoïdale autour de l'axe.

Selon une caractéristique de l'invention, dans chaque position axiale, l'organe d'accouplement est configuré pour occuper une position d'engrènement et une position de désengrènement dans lesquelles les première et deuxième surfaces inclinées des d'accouplement hélicoïdales et des saillies d'engrènement forment un contact surfacique.

Selon une caractéristique de l'invention, l'organe d'accouplement comprend des chants opposés l'un à l'autre qui sont définis dans des plans perpendiculaires à l'axe de l'organe d'accouplement et qui comportent respectivement les première et deuxième rangées de dents d'accouplement hélicoïdales.

Selon une caractéristique de l'invention, la première surface interne de chaque dent d'accouplement hélicoïdale définie dans un plan lequel forme un angle diédral compris entre 40° et 50° avec le plan du chant. Cette configuration permet à chaque dent d'accouplement de maintenir le contact avec une denture avec laquelle celle-ci est en prise.

Selon une caractéristique de l'invention, la deuxième surface externe de chaque dent d'accouplement hélicoïdale définie dans un plan lequel forme un angle diédral compris entre 30° et 40° avec le plan du chant. Une telle configuration permet le glissement de chaque dent d'accouplement par rapport à la denture avec laquelle elle est en prise de sorte à faciliter leur désengrènement.

De manière avantageuse, mais non limitativement, chaque dent présente une dimension longitudinale mesurée le long de l'axe longitudinal du corps annulaire comprise entre 0.2*L2 et 0.5*L2, L2 étant la dimension longitudinale du corps.

Suivant une caractéristique de l'invention, la dimension longitudinale de tête de l'organe d'accouplement est inférieure à la longueur d'un espacement prévu entre les première roues dentées. Cela permet de créer un jeu fonctionnel entre l'organe d'accouplement et les deux premières roues dentées de manière à permettre l'engrènement d'une seule première roue dentée à la fois.

Suivant une autre caractéristique de l'invention, le mécanisme comprend un dispositif de verrouillage/déverrouillage configuré de manière à verrouiller la position de l'organe d'accouplement dans l'une des deux positons axiales et à revenir dans l'autre des deux positions. Ainsi, avec ce dispositif, l'engagement de l'organe d'accouplement dans chaque position est garanti pour ne pas changer de mode en cours de fonctionnement, ce qui fiabilise le mécanisme et permet de rebasculer dans une position, par exemple en mode démarrage lors de l'arrêt de la turbomachine.

De manière avantageuse, mais non limitativement, le dispositif de verrouillage/déverrouillage comprend des moyens de verrouillage équipés d'au moins un élément de verrouillage configuré de manière à occuper une position neutre dans laquelle celui-ci est logé dans un premier logement prévu sur le premier axe pour autoriser le déplacement de l'organe d'accouplement et une position active dans laquelle celui-ci est reçu dans une cavité de l'organe d'accouplement pour empêcher le déplacement axial de l'organe d'accouplement.

De manière avantageuse, mais non limitativement, les moyens de rappel comportent au moins un organe mobile relié à un élément de rappel fixé dans un deuxième logement du premier axe et en ce que dans la position non sollicitée, l'organe mobile est en contact avec l'organe d'accouplement et dans la position sollicitée, l'organe mobile et l'élément de rappel sont logés dans le deuxième logement.

De manière avantageuse, mais non limitativement, le corps comprend des cannelures agencées sur une surface circonférentielle interne et orientées suivant l'axe longitudinal de l'organe d'accouplement. Cela permet de garantir et de faciliter le déplacement de l'organe d'accouplement sans arcboutement.

Selon une caractéristique de ce mécanisme, les première et seconde roues dentées présentent des dentures droites.

Selon une caractéristique de ce mécanisme, la première roue dentée du premier engrenage est reliée à un boitier à engrenages et la première roue dentée du deuxième engrenage est relié à une machine électrique.

L'invention porte également sur un procédé de transmission de puissance dans une turbomachine au moyen d'un mécanisme de transmission de puissance pour une turbomachine, le mécanisme comprenant :
- un réducteur comprenant un premier et un deuxième engrenages à rapports de réduction différent et comportant chacun une première roue dentée montée libres en rotation sur un même premier axe et une seconde roue dentée montée sur un même second axe et
- un organe d'accouplement monté solidaire en rotation et pouvant coulisser axialement sur le premier axe, l'organe d'accouplement comportant des première et deuxième rangées de dents d'accouplement hélicoïdales destinées à coopérer avec des saillies d'engrènement hélicoïdales complémentaires des premières roues dentées, les dents d'accouplement hélicoïdales des première et deuxième rangées de l'organe d'accouplement étant respectivement orientées suivant des première et deuxième directions opposées et sensiblement parallèles
le procédé comprenant les étapes suivantes :
- transmission d'un premier couple sur le second axe de manière à entraîner le premier axe via l'organe d'accouplement lequel occupe une première position axiale dans laquelle celui-ci est en prise avec la première roue dentée du premier engrenage;
- déplacement de l'organe d'accouplement depuis la première position axiale vers une deuxième position axiale d'entraînement dès qu'un second couple sur le premier axe dépasse le premier couple;
- transmission d'un deuxième couple sur le premier axe de manière à entraîner le second axe via l'organe d'accouplement qui engrène la première roue dentée du deuxième engrenage.

Selon encore une autre caractéristique du procédé, le dépassement du premier couple par le second couple implique un inversement de la direction des résultantes axiales des forces passant par les dents d'accouplement et saillies d'engrènement.

En particulier, les résultantes axiales sont orientées vers la première roue dentée du deuxième engrenage.

Selon encore une autre caractéristique du procédé, l'inversement des résultantes axiales implique le glissement des deuxièmes surfaces externes des dents d'accouplement et des saillies d'engrènement l'une par rapport à l'autre de sorte à entraîner le déplacement de l'organe d'accouplement vers sa deuxième position.

L'invention concerne également une turbomachine comprenant une machine électrique réversible, une boîte d'engrenage et un mécanisme de transmission de puissance présentant l'une quelconque des caractéristiques susmentionnées, le mécanisme de transmission reliant la machine électrique et la boîte d'engrenage.

Selon une caractéristique de l'invention, la machine électrique est un démarreur générateur à fréquence variable.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux figures annexées dans lesquels :
La figure 1 représente schématiquement en coupe axiale et partielle, un exemple de turbomachine à laquelle s'applique l'invention ;
La figure 2 est vue en coupe et partielle d'un exemple de réalisation d'un mécanisme de transmission de puissance selon l'invention ;
La figure 3 illustre schématiquement la cinématique du mécanisme illustré sur la figure 2 ;
La figure 4 est une vue en perspective d'un exemple de réalisation d'un organe d'accouplement selon l'invention ;
La figure 5 est une vue en coupe de l'organe d'accouplement selon la figure 1 ;
La figure 6 est une vue de détail d'une dent d'accouplement de l'exemple d'organe d'accouplement ;
La figure 7 représente schématiquement des dents d'accouplement d'un organe d'accouplement selon l'invention ;
La figure 8 est une représentation schématique et de détail de l'organe d'accouplement équipant un mécanisme de transmission de puissance selon l'invention;
La figure 9 est une vue schématique et en coupe axiale de l'organe d'accouplement agencé entre deux trains d'engrenage selon l'invention ; et
Les figures 10a à 10e représentent différentes positions occupées par l'organe d'accouplement dans le mécanisme de transmission de puissance selon l'invention.

### 6. Description de modes de réalisation de l'invention

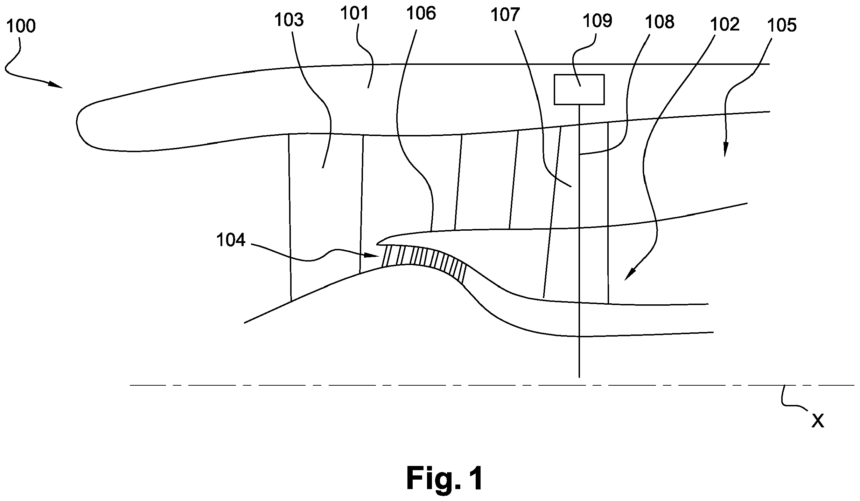

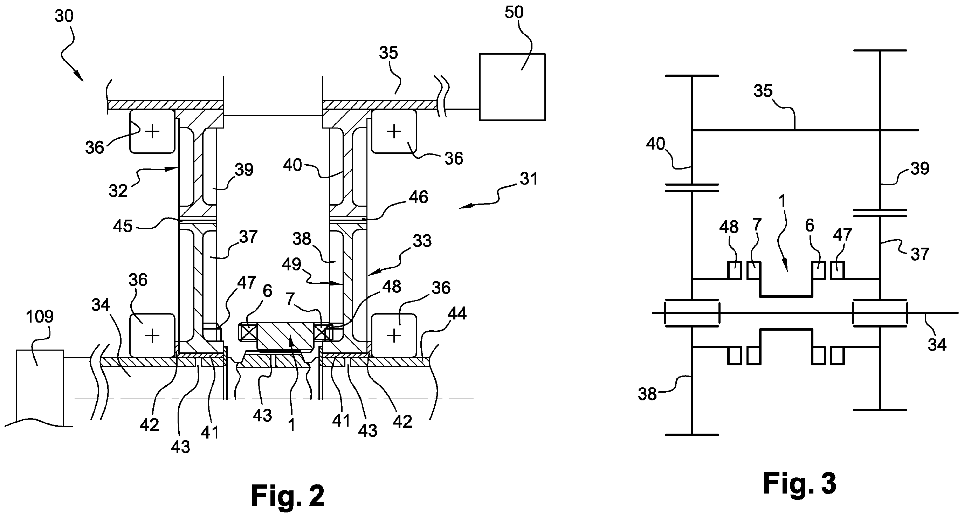

La figure 1 montre schématiquement une turbomachine selon l'invention. En particulier, il est représenté une turbomachine double flux pour un aéronef. Cette turbomachine 100 comprend de manière générale une nacelle 101 entourant un générateur de gaz 102 d'axe longitudinal X en amont duquel est montée une soufflante 103. Dans la présente invention, et de manière générale, les termes « amont » et « aval » sont définis par rapport à la circulation des gaz dans la turbomachine 100. Le générateur de gaz 102 comprend d'amont en aval un compresseur basse pression, un compresseur haute pression, une chambre de combustion, une turbine haute pression et une turbine basse pression. La turbomachine 100 comprend une veine primaire 104 dans laquelle circule un flux primaire qui traverse le générateur de gaz 102 et une veine secondaire 105 dans laquelle circule un flux secondaire entre la nacelle 101 et un carter 106 du générateur de gaz. Un bras de carter intermédiaire 107 s'étendant radialement entre le carter 106 et la nacelle 101 est tubulaire et traversé radialement par un arbre radial 108 qui assure une transmission de puissance entre un arbre coaxial à l'axe longitudinal X de la turbine haute pression et une boîte d'engrenage 109 connue sous la désignation anglaise de « Accessory gearbox » (siglée AGB). La boîte d'engrenage 109 entraîne via un mécanisme 30 de transmission de puissance une machine électrique 50 réversible permettant de démarrer la turbomachine 100 et de générer une énergie électrique après le démarrage (figure 2). La machine électrique 50 peut être un démarreur générateur à fréquence variable connue sous la désignation anglaise « Variable Frequency Starter Generator » (siglée VFSG).

En référence aux figures 2 et 3, le mécanisme 30 de transmission de puissance comprend un réducteur 31 comprenant un premier 32 et un deuxième 33 engrenages à rapports de réduction différents. Le réducteur 31 est agencé entre un premier 34 et un second 35 axes parallèles montés dans un carter (non représenté). Le premier axe 34 est couplé à la boîte d'engrenage 109 en prise avec une extrémité interne de l'arbre radial 108 relié à la turbomachine 100, et le second axe 35 est relié à la machine électrique 50 réversible. Les premier 34 et second 35 axes sont montés en rotation chacun via deux roulements 36 permettant de supporter les efforts axiaux et radiaux. Les roulements 36 sont du type roulement à billes par exemple. De manière alternative, des paliers hydrodynamiques peuvent remplacer les roulements.

Chaque premier 32 et deuxième 33 engrenage comporte une première roue dentée 37, 38 montée sur le même premier axe 34 et une seconde roue dentée 39, 40 montée sur le même second axe 35. Les premier 32 et deuxième 33 engrenages sont disposés dans des plans parallèles qui sont perpendiculaires chacun aux premier 34 et second 35 axes. Les premières 37, 38 et deuxièmes roues 39, 40 dentées sont disposées respectivement l'une en regard de l'autre. En particulier, les premières roues dentées 38, 37 sont montées libres en rotation sur le premier axe 34 tandis que les secondes roues dentées 39, 40 sont fixées au second axe 35. Un palier lisse 41 est disposé entre chaque première roue dentée 37, 38 et le premier axe 34 ce qui leur permet de tourner à des vitesses de rotation différentes de celle du premier axe 24. Les paliers lisses 41 sont pourvus chacun d'un bord 42 faisant office de butée axiale de sorte à limiter le déplacement axial en glissement de la première roue dentée 37, 38. Chaque butée axiale 42 est agencée entre un roulement 36 et la première roue dentée 37, 38.

Chaque palier lisse 41 est alimenté en huile au moyen de perçages 43 radiaux traversant une paroi 44 tubulaire du premier axe 34 ici creux. L'huile de lubrification est acheminée depuis un dispositif d'alimentation en huile (non représenté) dans le premier axe 34 puis sous l'action de forces centrifuges est injectée vers les paliers lisses 41.

Les premières 37, 38 et les deuxièmes roues dentées 39, 40 en prise comportent chacune une denture 45, 46 droite. Les dents s'étendent radialement depuis leur surface circonférentielle externe.

Chaque première roue 37, 38 dentée est munie de saillies d'engrènement 47, 48 qui sont agencées sur un côté latéral 49 de celles-ci. En d'autres termes, ces saillies d'engrènement 47, 48 s'étendent depuis le côté latéral 49 des premières roues dentées 37, 38. En particulier, les saillies d'engrènement 47 de la première roue dentée du premier engrenage 32 sont en vis-à-vis des saillies d'engrènement 48 de la première roue dentée 38 du deuxième engrenage 33. Les saillies d'engrènement 47, 48 sont hélicoïdales.

Le mécanisme de transmission 30 de puissance comprend également un organe d'accouplement 1 selon l'invention. Cet organe d'accouplement 1 est monté solidaire en rotation du premier axe 34. Suivant une configuration de l'invention, l'organe d'accouplement 1 est agencé entre les premières roues dentées 37, 38 des premier 32 et deuxième 33 engrenages.

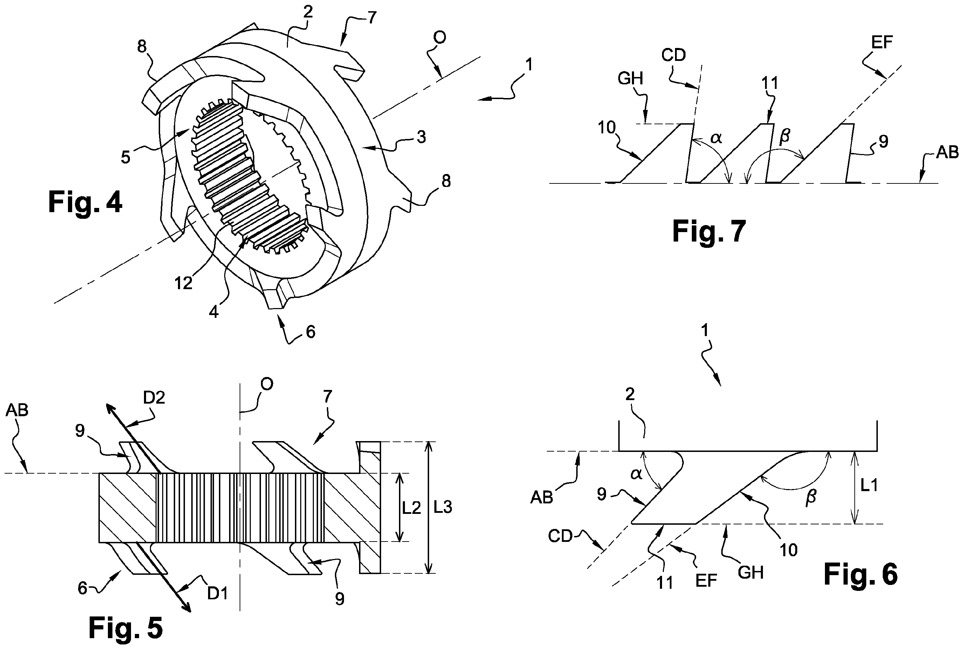

Cet organe d'accouplement 1 tel que celui-ci est représenté en particulier sur la figure 4, comprend un corps annulaire 2 suivant un axe O de révolution avec une surface circonférentielle externe 3 et une surface circonférentielle interne 4 opposée radialement. Le corps annulaire 2 présente deux chants 5 opposés par rapport à l'axe O et reliant chacun la surface circonférentielle interne 4 et la surface circonférentielle externe 3. Chaque chant 5 est défini dans un plan AB perpendiculaire à l'axe O.

L'organe d'accouplement 1 comprend une première rangée annulaire 6 de dents d'accouplement et une deuxième rangée annulaire 7 de dents d'accouplement opposée. La première rangée 6 de dents d'accouplement est configurée de manière à s'engrener avec la première roue dentée 37 en avant de l'organe d'accouplement 1 et la deuxième rangée 7 de dents d'accouplement est configurée de manière à s'engrener avec la première roue dentée 38 en arrière de l'organe d'accouplement. Les termes « avant » et « arrière » sont définis par rapport à l'axe O. En particulier, la première 6 et la deuxième 7 rangées de dents d'accouplement sont chacune portée par un des chants 5 avant et arrière du corps annulaire 2. Les dents d'accouplement de chaque première et deuxième rangée sont hélicoïdales.

Selon une configuration de cet organe d'accouplement 1 selon l'invention, les dents d'accouplement 8 hélicoïdales de la première rangée 6 et les dents 8 d'accouplement hélicoïdales de la deuxième rangée 7 sont orientées suivant des première et deuxième directions D1, D2 opposées et sensiblement parallèles. En d'autres termes, les dents d'accouplement 8 de la première rangée 6 sont en saillie du chant avant et sont toutes orientées suivant une première direction D1 qui est inclinée par rapport au chant et opposée à la deuxième direction D2 des dents d'accouplement de la deuxième rangée 7 en saillie du chant arrière. Les directions D1, D2 sont transversales par rapport au plan AB.

En référence aux figures 6 et 7, chaque dent d'accouplement 8 hélicoïdale présente une première surface 9 ici interne définie dans un plan CD sécant avec le plan AB du chant 5 et une deuxième surface 10 opposée axialement et ici externe définie dans un plan EF sécant avec le plan AB du chant 5. La première surface interne 9 et la deuxième surface externe 10 sont reliées par le sommet 11 formant une surface plane définie dans un plan GH sensiblement parallèle au plan AB du chant. Le plan CD de la première surface interne 9 forme avec le plan AB du chant un angle diédral compris entre 40° et 50°. Tandis que le plan EF de la deuxième surface externe 10 forme avec le plan AB du chant un angle diédral compris entre 140° et 150°. Chaque dent d'accouplement 8 présente également une dimension longitudinale L1 comprise entre 0.2*L2 et 0.5*L2 avec L2 la dimension longitudinale suivant l'axe O du corps annulaire 2.

Les dents d'accouplement 8 de l'organe d'accouplement sont complémentaires avec les saillies d'engrènement 47, 48 des premières roues dentées 37, 38. En d'autres termes, les saillies d'engrènement comprennent des première 21 et deuxième 22 surfaces opposées axialement et avec des inclinaisons respectivement identiques à celles de la première surface 9 et de la deuxième surface 10. L'inclinaison des première et deuxième surfaces des dents d'accouplement 8 et les saillies d'engrènement 47, 48 permet un contact surfacique. Cette configuration permet d'augmenter la durée de vie de l'organe d'accouplement.

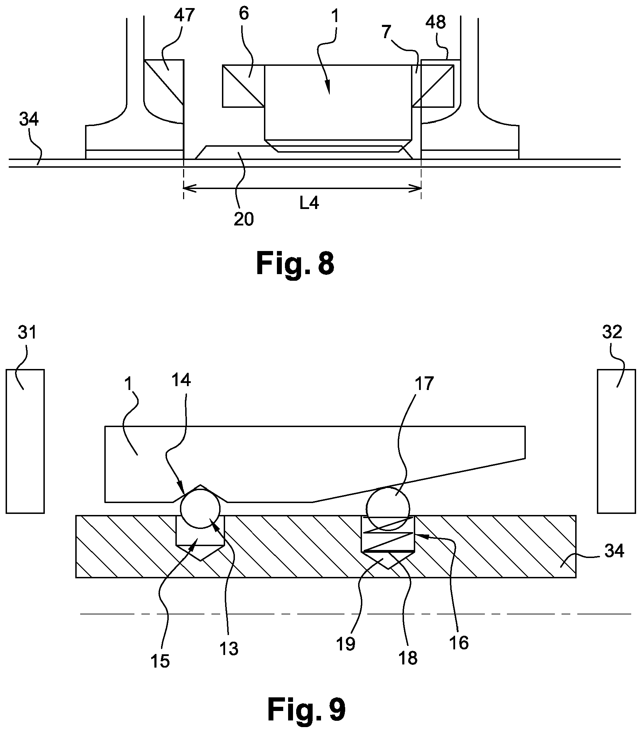

L'organe d'accouplement 1 est monté également coulissant axialement sur le premier axe 34 de manière à occuper au moins deux positions d'engrènement prédéterminées où les dents d'accouplement 8 engrènent les saillies d'engrènement 47, 48 complémentaires de l'une des premières roues dentées 37, 38 rendue alors solidaire en rotation avec le premier axe 34. Pour cela, en référence à la figure 8, la surface circonférentielle interne 4 du corps annulaire 2 comporte des cannelures 12 (cf. figure 4) s'étendant suivant l'axe O et qui reçoivent des nervures 20 axiales du premier axe 34. De la sorte, l'organe d'accouplement peut aisément coulisser d'une position à l'autre. L'huile alimente également l'organe d'accouplement via des perçages 43 radiaux traversant la paroi 44 entre les premier et deuxième engrenages.

En particulier, l'organe d'accouplement 1 est mobile entre au moins une première position axiale dans laquelle la première rangée 6 de dents d'accouplement est en prise avec les saillies d'engrènement 47 de la première roue dentée 37 du premier engrenage 32 et une deuxième position axiale dans laquelle la deuxième rangée 7 de dents d'accouplement est en prise avec les saillies d'engrènement 48 de la première roue dentée 38 du deuxième engrenage 33.

Comme cela est visible également sur les figures 5 et 8, la dimension longitudinale L3 de tête (de sommet à sommet des dents d'accouplement) de l'organe d'accouplement 1 est inférieure à la longueur L4 d'un espacement prévu entre les première roues dentées 37, 38. En d'autres termes, un jeu fonctionnel est prévu entre l'organe d'accouplement 1 et les deux premières roues dentées 37, 38. De la sorte, l'engrènement d'une seule première roue dentée est possible à la fois.

En référence à la figure 9, le mécanisme de transmission de puissance comprend un dispositif de verrouillage/déverrouillage configuré de manière à verrouiller la position de l'organe d'accouplement dans l'une des deux positons axiales. Le dispositif de verrouillage/déverrouillage comporte des moyens de verrouillage permettant à l'organe d'accouplement de se maintenir dans la deuxième position. Les moyens de verrouillage comprennent un élément de verrouillage 13 configurée de manière à occuper une position neutre dans laquelle celui-ci autorise le déplacement de l'organe d'accouplement 1 et une position active dans laquelle cet élément de verrouillage 13 est en contact avec l'organe d'accouplement 1 de sorte à empêcher le déplacement axial lorsque celui-ci occupe sa deuxième position. En particulier, dans la position neutre, l'élément de verrouillage 13 est logé dans un premier logement 15 prévu sur le premier axe 34 tandis que dans la position active, l'élément de verrouillage 13 est reçu dans une cavité 14 de l'organe d'accouplement 1. Cette cavité présente une section de forme conique. L'élément de verrouillage 13 se déplace de la position neutre à la position active en fonction d'une valeur prédéterminée du régime du premier axe. La valeur prédéterminée est par exemple comprise entre 10000 et 11000 tr/min. L'élément de verrouillage 13 comprend ici une bille. Les faces coniques de la cavité 14 assurent le verrouillage de la bille 13 subissant l'action d'une force centrifuge engendrée lors de la rotation du premier axe 34.

Le dispositif de verrouillage/déverrouillage comprend également des moyens de rappel 16 permettant à l'organe d'accouplement 1 de revenir dans une des positions, ici dans sa première position. Les moyens de rappel 16 sont mobiles entre une position non sollicitée et une position sollicitée en fonction de l'atteinte d'une valeur de régime prédéterminée du premier axe 34. Les moyens de rappel 16 comportent un organe mobile 17 relié à un élément de rappel 18 lequel est fixé dans un deuxième logement 19 du premier axe 34. Dans la position non sollicitée, l'organe mobile 17 est en contact avec l'organe d'accouplement 1 et dans la position sollicitée, l'organe mobile 17 et l'élément de rappel 18 sont logés dans le deuxième logement 19. L'organe mobile 17 comprend ici une bille. L'élément de rappel 18 comprend ici un ressort. Lorsque le régime du premier axe est inférieur à environ 10500 tr/min par exemple, l'élément de rappel 18 pousse l'organe d'accouplement vers sa première position. En particulier, pour un régime d'arbre d'entrée supérieur à 10500 tr/min, la bille de verrouillage 13 bloque le retour de l'organe d'accouplement 1 vers sa première position (position de démarrage) car la composante de l'effort centrifuge appliquée dans la cavité 14 de l'organe d'accouplement 1 l'emporte sur les moyens de rappel 16 (ensemble bille 17 et ressort 18). En revanche, en-dessous de ce régime (10500 tr/min), les moyens de rappel 16 prédominent et tendent à pousser l'organe d'accouplement 1 vers la première position axiale. Il est à noter que le retour de l'organe d'accouplement 1 en première position s'effectue qu'en cas d'arrêt complet du moteur. En cas d'une baisse de régime momentanée où celui-ci serait inférieur à 10500 tr/min, le couple qui transite dans le deuxième engrenage 31 (train de génération) permet le maintien de l'organe d'accouplement 1 dans sa deuxième position axiale.

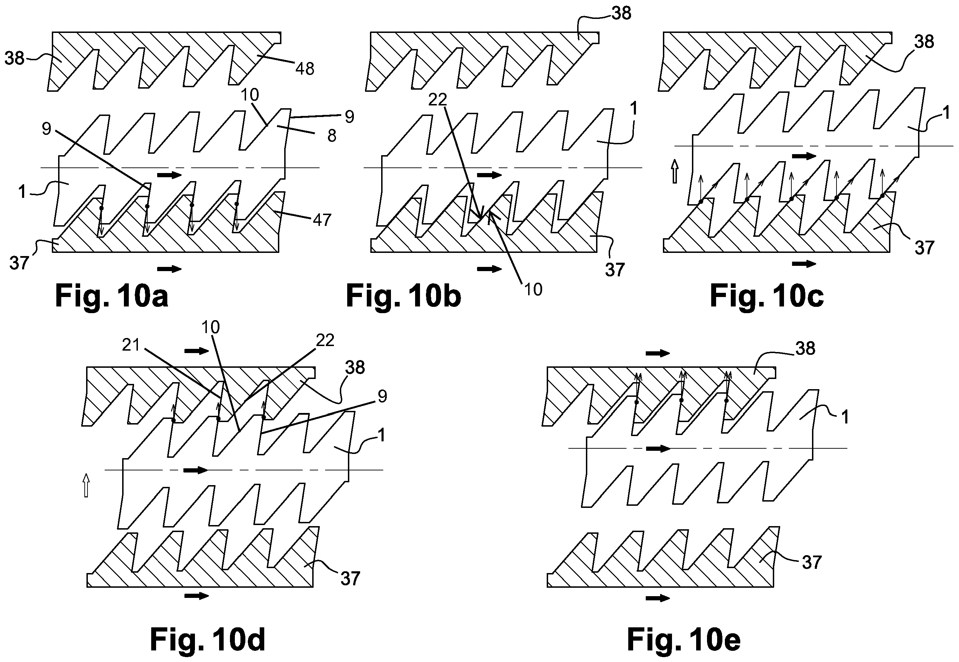

Nous allons maintenant décrire la transmission de puissance au sein de la turbomachine 100 décrite précédemment au moyen du mécanisme 30 de transmission de puissance. En phase de démarrage un premier couple est appliqué au second axe 35 du mécanisme de transmission de puissance afin de l'entraîner en rotation. La deuxième roue dentée 39 du premier engrenage 32 étant solidaire du second axe 35 entraîne la première roue dentée 37 du premier engrenage laquelle entraîne en rotation le premier axe 34. Les saillies d'engrènement 47 de la première roue dentée du premier engrenage sont en prise avec les dents d'accouplement de l'organe d'accouplement 1. Dans ce cas de figure, les résultantes axiales des forces passant par les dents d'accouplement et saillies d'engrènement de la première roue 37 dentée sont dirigées vers celle-ci (cf. figure 10a).

En effet, lors du démarrage, l'organe d'accouplement 1 occupe sa première position, initiale, où celui-ci est adjacent à la première roue dentée du premier engrenage (les dents et saillies sont en prise). La transmission de puissance à travers le réducteur est assurée par le premier engrenage 32 ayant le rapport de réduction le plus grand qui est seul actif pour transmettre le mouvement à la turbomachine. Dans cette première position axiale, l'organe d'accouplement 1 occupe une position d'entraînement ou d'engrènement dans laquelle la première surface 9 de la dent d'accouplement 8 est en contact surfacique avec la première surface 21 de la saillie d'engrènement de la première roue dentée 37 du premier engrenage. Cela permet de maintenir le contact entre l'organe d'accouplement 1 et la première roue dentée du premier engrenage.

Lorsque le turbomachine 100 a démarré le couple s'inverse. Un second couple est alors appliqué sur le premier axe 34 et est supérieur au premier couple. Ceci implique un inversement de la direction des résultantes axiales des forces passant par les dents d'accouplement et saillies d'engrènement. Les résultantes axiales sont orientées vers la première roue dentée du deuxième engrenage. Cet inversement implique un déplacement angulaire de l'organe d'accouplement 1 par rapport à la première roue dentée du premier engrenage. L'organe d'accouplement 1, toujours dans sa première position axiale occupe alors une deuxième position de désengrènement ou de désengagement dans laquelle la deuxième surface 10 de la dent d'accouplement 8 est en contact surfacique avec la deuxième surface 22 de la saillie d'engrènement de la première roue dentée 37 du premier engrenage (cf. figure 10b). Cela implique le glissement des deuxièmes surfaces externes des dents d'accouplement et des saillies d'engrènement les unes par rapport aux autres. Ainsi, l'organe d'accouplement se déplace en coulissant sur le premier axe 34 de sa première position axiale vers sa deuxième position axiale (vers la première roue dentée 38 du deuxième engrenage 33 en vis-à-vis (cf. figure 10c)).

Pendant le déplacement axial de l'organe d'accouplement 1, les deuxièmes surfaces 10, 22 des dents d'accouplement et des saillies d'engrènement glissent les unes par rapport aux autres jusqu'à ce que celles-ci ne soient plus en contact. La première roue dentée du premier engrenage n'engrène donc plus l'organe d'accouplement 1 (cf. figure 10c).

L'organe d'accouplement 1 occupe alors sa deuxième position axiale où celui-ci engrène la première roue dentée 38 du deuxième engrenage. Dans cette position, l'organe d'accouplement occupe également une position d'entraînement dans laquelle les premières surfaces 9, 21 des dents d'accouplement et des saillies d'engrènement permettent de maintenir le contact entre l'organe d'accouplement 1 et la première roue dentée 38 du deuxième engrenage. Un deuxième couple est appliqué sur le premier axe 34 de manière à entraîner le second axe 35 via l'organe d'accouplement 1. En particulier, la boîte d'engrenage 109 fournie de la puissance à la machine électrique 50 pour que celui-ci produise de l'énergie électrique (cf. figure 10d et 10e). Lors de l'arrêt de la turbomachine, le dispositif de verrouillage/déverrouillage ramène l'organe d'accouplement dans sa première position axiale. Pour cela, l'organe d'accouplement 1, se trouvant dans sa deuxième position axiale, est décalé angulairement de la première roue dentée du deuxième engrenage pour occuper sa deuxième position de désengrènement.

Ainsi, le passage en mode démarreur/générateur s'effectue de manière autonome et automatique.

## Revendications

1. Mécanisme (30) de transmission de puissance pour une turbomachine (100), comprenant :
- un réducteur (31) comprenant un premier (32) et un deuxième (33) engrenages à rapports de réduction différents et comportant chacun une première roue (37, 38) dentée montée sur un même premier axe (34) et une seconde roue (39, 40) dentée montée sur un même second axe (35), les premières roues (37, 38) dentées étant montées libres en rotation sur le premier axe (34) et étant munies chacune de saillies d'engrènement (47, 48) hélicoïdales sur un côté (49) de celles-ci ; et,
- un organe (1) d'accouplement comprenant un corps annulaire (2) d'axe (O) de révolution lequel comporte des première et deuxième rangées (6, 7) de dents d'accouplement (8) hélicoïdales, les dents d'accouplement (8) hélicoïdales des première et deuxième (6, 7) rangées sont respectivement orientées suivant des première et deuxième directions (D1, D2) opposées et sensiblement parallèles,
l'organe d'accouplement étant monté solidaire en rotation sur le premier axe (34) et coulissant axialement sur ledit premier axe (34) de manière à occuper au moins deux positions axiales d'engrènement prédéterminées où les dents d'accouplement (8) engrènent les saillies d'engrènement (47, 48) complémentaires de l'une des premières roues (37, 38) dentées rendue alors solidaire en rotation avec le premier axe (34), les dents d'accouplement (8) hélicoïdales et les saillies d'engrènement (47, 48) hélicoïdales étant configurées pour former un contact surfacique dans chaque position axiale, les saillies d'engrènement hélicoïdales comprenant des première et deuxième surfaces avec des inclinaisons respectivement identiques à celles d'une première surface et d'une deuxième surface des dents d'accouplement hélicoïdales en regard l'une de l'autre.

2. Mécanisme (30) selon la revendication 1, **caractérisé en ce que** l'organe d'accouplement comprend des chants (5) opposés l'un à l'autre qui sont définis dans des plans sensiblement perpendiculaires (AB) à l'axe (O) et qui comportent respectivement lesdites première (6) et deuxième (7) rangées de dents d'accouplement (8) hélicoïdales.

3. Mécanisme (30) selon la revendication 2, **caractérisé en ce que** la première surface interne (9) de chaque dent d'accouplement hélicoïdale définie dans un plan (CD) lequel forme un angle diédral (α) compris entre 40° et 50° avec le plan (AB) du chant (5).

4. Mécanisme (30) selon la revendication 2 ou 3, **caractérisé en ce que** la deuxième surface externe (10) de chaque dent d'accouplement hélicoïdale est définie dans un plan (EF) lequel forme un angle diédral (β) compris entre 30° et 40° avec le plan (AB) du chant (5).

5. Mécanisme (30) selon l'une quelconque des revendications précédentes, **caractérisé en ce que** chaque dent (8) présente une dimension longitudinale mesurée le long de l'axe (O) comprise entre 0.2*L2 et 0.5*L2, L2 étant la dimension longitudinale du corps annulaire (2).

6. Mécanisme (30) selon l'une quelconque des revendications précédentes, **caractérisé en ce que** la dimension longitudinale de tête de l'organe d'accouplement (1) est inférieure à la longueur d'un espacement prévu entre les première roues dentées (37, 38) y compris les saillies d'engrènement (47, 48).

7. Mécanisme (30) selon l'une quelconque des revendications précédentes, **caractérisé en ce qu'**il comprend un dispositif de verrouillage/déverrouillage configurés de manière à verrouiller la position de l'organe d'accouplement (1) dans l'une des deux positons axiales et à revenir dans l'autre des deux positions.

8. Mécanisme (30) selon la revendication précédente, **caractérisé en ce que** le dispositif de verrouillage/déverrouillage comprend des moyens de verrouillage équipés d'au moins un élément de verrouillage (13) configuré de manière à occuper une position neutre dans laquelle celui-ci est logé dans un premier logement (15) prévu sur le premier axe (34) pour autoriser le déplacement de l'organe d'accouplement (1) et une position active dans laquelle celui-ci est reçu dans une cavité (14) de l'organe d'accouplement (1) pour empêcher le déplacement axial de l'organe d'accouplement (1).

9. Mécanisme (30) selon la revendication 7 ou 8, **caractérisé en ce que** le dispositif de verrouillage/déverrouillage comprend des moyens de rappel (16) mobiles entre une position non sollicitée et une position sollicitée fonction de l'atteinte d'une valeur de régime prédéterminée du premier axe (34).

10. Mécanisme (30) selon la revendication précédente, **caractérisé en ce que** les moyens de rappel (16) comportent au moins un organe mobile (17) relié à un élément de rappel (18) fixé dans un deuxième logement (19) du premier axe (34) et **en ce que** dans la position non sollicitée, l'organe mobile (17) est en contact avec l'organe d'accouplement (1) et dans la position sollicitée, l'organe mobile (17) et l'élément de rappel (18) sont logés dans le deuxième logement (19).

11. Mécanisme (1) selon l'une quelconque des revendications précédentes, **caractérisé en ce que** le corps (2) de l'organe d'accouplement (1) comprend des cannelures (12) agencées sur une surface circonférentielle interne (4) et orientées suivant l'axe (O).

12. Mécanisme (30) selon la revendication 1, **caractérisé en ce que** les premières et secondes roues dentées (37, 38, 39, 40) présentent des dentures droites.

13. Procédé de transmission de puissance dans une turbomachine au moyen d'un mécanisme (30) de transmission de puissance pour une turbomachine (100), le mécanisme comprenant :
- un réducteur (31) comprenant un premier (32) et un deuxième (33) engrenages à rapports de réduction différent et comportant chacun une première roue (37, 38) dentée montée libres en rotation sur un même premier axe (34) et une seconde roue (39, 40) dentée montée sur un même second axe (35), et
- un organe (1) d'accouplement monté solidaire en rotation et pouvant coulisser axialement sur le premier axe (34), l'organe d'accouplement (1) comportant des première et deuxième rangées (6, 7) de dents d'accouplement (8) hélicoïdales destinées à coopérer avec des saillies d'engrènement (47, 48) hélicoïdales complémentaires des premières roues dentées (37, 38), les dents d'accouplement (8) hélicoïdales des première et deuxième (6, 7) rangées de l'organe d'accouplement (1) étant respectivement orientées suivant des première et deuxième directions (D1, D2) opposées et sensiblement parallèles
dans lequel le procédé comprend les étapes suivantes :
- transmission d'un premier couple sur le second axe (34) de manière à entrainer le premier axe (34) via l'organe d'accouplement (1) lequel occupe une première position axiale dans laquelle celui-ci est en prise avec la première roue dentée (37) du premier engrenage (32);
- déplacement de l'organe d'accouplement (1) depuis la première position vers une deuxième position axiale d'entrainement dès qu'un second couple appliqué sur le premier axe dépasse le premier couple;
- transmission d'un deuxième couple sur le premier axe (34) de manière à entraîner le second axe (35) via l'organe d'accouplement (1) lequel occupe une deuxième position axiale dans laquelle celui-ci engrène la première roue dentée du deuxième engrenage,
les dents d'accouplement (8) hélicoïdale et les saillies d'engrènement (47, 48) hélicoïdales étant configurées pour former un contact surfacique dans la première et la deuxième positions axiales, les saillies d'engrènement hélicoïdales comprenant des première et deuxième surfaces avec des inclinaisons respectivement identiques à celles d'une première surface et d'une deuxième surface des dents d'accouplement hélicoïdales en regard l'une de l'autre.

14. Turbomachine comprenant une machine électrique réversible (50), une boîte d'engrenage (109) et un mécanisme de transmission de puissance selon l'une quelconque des revendications 1 à 12 reliant la machine électrique et la boîte d'engrenage.

15. Turbomachine selon la revendication précédente, **caractérisée en ce que** la machine électrique est un démarreur générateur à fréquence variable.

## Patentansprüche

1. Mechanismus (30) zur Kraftübertragung für eine Turbomaschine (100), umfassend:
- einen Reduktor (31), der ein erstes (32) und ein zweites (33) Getriebe mit unterschiedlichen Untersetzungsverhältnissen umfasst, die jeweils ein erstes Zahnrad (37, 38), das auf einer gleichen ersten Achse (34) montiert ist, und ein zweites Zahnrad (39, 40), das auf einer gleichen zweiten Achse (35) montiert ist, umfassen, wobei die ersten Zahnräder (37, 38) frei drehend auf der ersten Achse (34) montiert sind und jeweils mit schrägverzahnten Eingriffsvorsprüngen (47, 48) auf einer Seite (49) von ihnen versehen sind; und
- ein Kupplungsorgan (1), das einen ringförmigen Körper (2) mit einer Drehachse (O) umfasst, der erste und zweite Reihen (6, 7) von schrägverzahnten Kupplungszähnen (8) umfasst, wobei die schrägverzahnten Kupplungszähne (8) der ersten und zweiten (6, 7) Reihen jeweils gemäß ersten und zweiten Richtungen (D1, D2) ausgerichtet sind, die entgegengesetzt und im Wesentlichen parallel verlaufen,
wobei das Kupplungsorgan drehfest auf der ersten Achse (34) montiert ist und axial auf der ersten Achse (34) gleitet, um mindestens zwei vorbestimmte, axiale Eingriffspositionen einzunehmen, in denen die Kupplungszähne (8) in die komplementären Eingriffsvorsprünge (47, 48) von dem einen der ersten Zahnräder (37, 38) eingreifen, das nun mit der ersten Achse (34) drehfest gemacht wird, wobei die schrägverzahnten Kupplungszähne (8) und die schrägverzahnten Eingriffsvorsprünge (47, 48) so ausgestaltet sind, dass sie in jeder axialen Position einen Oberflächenkontakt bilden, wobei die schrägverzahnten Eingriffsvorsprünge erste und zweite Oberflächen mit Neigungen umfassen, die jeweils identisch sind mit jenen einer ersten Oberfläche und einer zweiten Oberfläche der schrägverzahnten Kupplungszähne, die einander zugewandt sind.

2. Mechanismus (30) nach Anspruch 1, **dadurch gekennzeichnet, dass** das Kupplungsorgan einander gegenüberliegende Schmalseiten (5) umfasst, die in Ebenen (AB) definiert sind, die im Wesentlichen senkrecht zur Achse (O) verlaufen, und die jeweils die erste (6) und zweite (7) Reihe von schrägverzahnten Kupplungszähnen (8) umfassen.

3. Mechanismus (30) nach Anspruch 2, **dadurch gekennzeichnet, dass** die erste Innenfläche (9) jedes schrägverzahnten Kupplungszahns in einer Ebene (CD) definiert ist, die einen Diederwinkel (a), der zwischen 40° und 50° beträgt, mit der Ebene (AB) der Schmalseite (5) bildet.

4. Mechanismus (30) nach Anspruch 2 oder 3, **dadurch gekennzeichnet, dass** die zweite Außenfläche (10) jedes schrägverzahnten Kupplungszahns in einer Ebene (EF) definiert ist, die einen Diederwinkel (β), der zwischen 30° und 40° beträgt, mit der Ebene (AB) der Schmalseite (5) bildet.

5. Mechanismus (30) nach einem der vorstehenden Ansprüche, **dadurch gekennzeichnet, dass** jeder Zahn (8) eine entlang der Achse (O) gemessene Längsabmessung aufweist, die zwischen 0,2^{∗}L2 und 0,5^{∗}L2 beträgt, wobei L2 die Längsabmessung des ringförmigen Körpers (2) ist.

6. Mechanismus (30) nach einem der vorstehenden Ansprüche, **dadurch gekennzeichnet, dass** die Kopflängsabmessung des Kupplungsorgans (1) kleiner ist als die Länge eines Abstands, der zwischen den ersten Zahnrädern (37, 38) vorgesehen ist, einschließlich der Eingriffsvorsprünge (47, 48).

7. Mechanismus (30) nach einem der vorstehenden Ansprüche, **dadurch gekennzeichnet, dass** er eine Vorrichtung zur Verriegelung/Entriegelung umfasst, die ausgestaltet ist, um die Position des Kupplungsorgans (1) in einer der zwei axialen Positionen zu verriegeln und in die andere der zwei Positionen zurückzukommen.

8. Mechanismus (30) nach dem vorstehenden Anspruch, **dadurch gekennzeichnet, dass** die Vorrichtung zur Verriegelung/Entriegelung Verriegelungsmittel umfasst, die mit mindestens einem Verriegelungselement (13) ausgestattet sind, das ausgestaltet ist, um eine neutrale Position einzunehmen, in der es in einer ersten Aufnahme (15) aufgenommen ist, die auf der ersten Achse (34) vorgesehen ist, um die Verschiebung des Kupplungsorgans (1) zuzulassen, und eine aktive Position, in der es in einem Hohlraum (14) des Kupplungsorgans (1) aufgenommen ist, um die axiale Verschiebung des Kupplungsorgans (1) zu verhindern.

9. Mechanismus (30) nach Anspruch 7 oder 8, **dadurch gekennzeichnet, dass** die Vorrichtung zur Verriegelung/Entriegelung Rückstellmittel (16) umfasst, die zwischen einer nicht beanspruchten Position und einer beanspruchten Position in Abhängigkeit vom Erreichen eines vorbestimmten Betriebswerts der ersten Achse (34) beweglich sind.

10. Mechanismus (30) nach dem vorstehenden Anspruch, **dadurch gekennzeichnet, dass** die Rückstellmittel (16) mindestens ein bewegliches Organ (17) umfassen, das mit einem Rückstellelement (18) verbunden ist, das in einer zweiten Aufnahme (19) der ersten Achse (34) fixiert ist, und dadurch, dass in der nicht beanspruchten Position das bewegliche Organ (17) mit dem Kupplungsorgan (1) in Kontakt ist und in der beanspruchten Position das bewegliche Organ (17) und das Rückstellelement (18) in der zweiten Aufnahme (19) aufgenommen sind.

11. Mechanismus (1) nach einem der vorstehenden Ansprüche, **dadurch gekennzeichnet, dass** der Körper (2) des Kupplungsorgans (1) Rillen (12) umfasst, die auf einer inneren Umfangsfläche (4) angeordnet sind und gemäß der Achse (O) ausgerichtet sind.

12. Mechanismus (30) nach Anspruch 1, **dadurch gekennzeichnet, dass** die ersten und zweiten Zahnräder (37, 38, 39, 40) gerade Zahnungen aufweisen.

13. Verfahren zur Kraftübertragung in einer Turbomaschine mittels eines Mechanismus (30) zur Kraftübertragung für eine Turbomaschine (100), wobei der Mechanismus umfasst:
- einen Reduktor (31), der ein erstes (32) und ein zweites (33) Getriebe mit unterschiedlichen Untersetzungsverhältnissen umfasst, und die jeweils ein erstes Zahnrad (37, 38), das auf einer gleichen ersten Achse (34) frei drehend montiert ist, und ein zweites Zahnrad (39, 40), das auf einer gleichen zweiten Achse (35) montiert ist, umfassen, und
- ein Kupplungsorgan (1), das drehfest und axial gleitbar auf der ersten Achse (34) montiert ist, wobei das Kupplungsorgan (1) erste und zweite Reihen (6, 7) von schrägverzahnten Kupplungszähnen (8) umfasst, die dazu bestimmt sind, mit komplementären, schrägverzahnten Eingriffsvorsprüngen (47, 48) der ersten Zahnräder (37, 38) zusammenzuwirken, wobei die schrägverzahnten Kupplungszähne (8) der ersten und zweiten (6, 7) Reihen jeweils gemäß ersten und zweiten Richtungen (D1, D2) ausgerichtet sind, die entgegengesetzt und im Wesentlichen parallel verlaufen,
wobei das Verfahren folgende Schritte umfasst:
- Übertragen eines ersten Drehmoments auf die zweite Achse (34), um die erste Achse (34) über das Kupplungsorgan (1) anzutreiben, das eine erste axiale Position einnimmt, in der es mit dem ersten Zahnrad (37) des ersten Getriebes (32) in Eingriff ist;
- Verschieben des Kupplungsorgans (1) aus der ersten Position in eine zweite axiale Antriebsposition, sobald ein zweites Drehmoment, das auf die erste Achse angewendet wird, das erste Drehmoment übersteigt;
- Übertragen eines zweiten Drehmoments auf die erste Achse (34), um die zweite Achse (35) über das Kupplungsorgan (1) anzutreiben, das eine zweite axiale Position einnimmt, in der es in das erste Zahnrad des zweiten Getriebes eingreift,
wobei die schrägverzahnten Kupplungszähne (8) und die schrägverzahnten Eingriffsvorsprünge (47, 48) so ausgestaltet sind, dass sie in der ersten und der zweiten axialen Position einen Oberflächenkontakt bilden, wobei die schrägverzahnten Eingriffsvorsprünge erste und zweite Oberflächen mit Neigungen umfassen, die jeweils identisch sind mit jenen einer ersten Oberfläche und einer zweiten Oberfläche der schrägverzahnten Kupplungszähne, die einander zugewandt sind.

14. Turbomaschine, umfassend eine reversible elektrische Maschine (50), einen Getriebekasten (109) und einen Mechanismus zur Kraftübertragung nach einem der Ansprüche 1 bis 12, der die elektrische Maschine und den Getriebekasten verbindet.

15. Turbomaschine nach dem vorstehenden Anspruch, **dadurch gekennzeichnet, dass** die elektrische Maschine ein Startergenerator mit variabler Frequenz ist.

## Claims

1. Power transmission mechanism (30) for a turbomachine (100), comprising:
- a reduction gear (31) comprising a first gear (32) and a second gear (33) having different reduction ratios and each comprising a first gear wheel (37, 38) mounted on the same first axis (34) and a second gear wheel (39, 40) mounted on the same second axis (35), the first gear wheels (37, 38) being mounted so as to rotate freely on the first axis (34) and each provided with helical meshing projections (47, 48) on a side (49) of the latter; and,
- a coupling member (1) comprising an annular body (2) with an axis of revolution (O) which comprises first and second rows (6, 7) of helical coupling teeth (8), the helical coupling teeth (8) of the first and second rows (6, 7) are respectively oriented opposite and essentially parallel to first and second directions (D1, D2),
the coupling member being mounted so as to rigidly rotate on the first axis (34) and sliding axially on said first axis (34) so as to occupy at least two predetermined axial meshing positions in which the coupling teeth (8) mesh with complementary meshing projections (47, 48) of one of the first gear wheels (37, 38), which is then made to rigidly rotate with the first axis (34), the helical coupling teeth (8) and the helical meshing projections (47, 48) being configured to form a surface contact in each axial position, the helical meshing projections comprising first and second surfaces with inclinations that are respectively identical to those of a first surface and of a second surface of the helical coupling teeth facing one another.

2. Mechanism (30) according to claim 1, **characterised in that** the coupling member comprises edges (5) opposite one another, which are defined in planes that are substantially perpendicular (AB) to the axis (O) and which respectively comprise said first (6) and second (7) rows of helical coupling teeth (8).

3. Mechanism (30) according to claim 2, **characterised in that** the first inner surface (9) of each helical coupling tooth is defined in a plane (CD) forming a dihedral angle (α) of between 40° and 50° with the plane (AB) of the edge (5).

4. Mechanism (30) according to claim 2 or 3, **characterised in that** the second outer surface (10) of each helical coupling tooth is defined in a plane (EF) forming a dihedral angle (β) of between 30° and 40° with the plane (AB) of the edge (5).

5. Mechanism (30) as claimed in any preceding claim, **characterised in that** each tooth (8) has a longitudinal dimension measured along the axis (O) between 0.2*L2 and 0.5*L2, L2 being the longitudinal dimension of the annular body (2).

6. Mechanism (30) as claimed in any preceding claim, **characterised in that** the head longitudinal dimension of the coupling member (1) is less than the length of a spacing provided between the first gear wheels (37, 38), including also the meshing projections (47, 48).

7. Mechanism (30) as claimed in any preceding claim, **characterised in that** it comprises a locking/unlocking device configured in such as way as to lock the position of the coupling member (1) in one of the two axial positions and to return to the other of the two positions.

8. Mechanism (30) as claimed in the preceding claim, **characterised in that** the locking/unlocking device comprises means for locking provided with at least one locking element (13) configured so as to occupy a neutral position wherein the latter is housed in a first housing (15) provided on the first axis (34) in order to authorise the displacement of the coupling member (1) and an active position wherein the latter is received in a cavity (14) of the coupling member (1) in order to prevent the axial displacement of the coupling member (1).

9. Mechanism (30) according to claim 7 or 8, **characterised in that** the locking/unlocking device comprises mobile biasing means (16) between an unsolicited position and a solicited position when a predetermined speed value of the first axis is reached (34).

10. Mechanism (30) as claimed in the preceding claim, **characterised in that** the biasing means (16) comprises at least one mobile member (17) connected to a biasing element (18) fastened in a second housing (19) of the first axis (34) and **in that** in the unsolicited position, the mobile member (17) is in contact with the coupling member (1) and in the solicited position, the mobile member (17) and the biasing element (18) are housed in the second housing (19).

11. Mechanism (1) as claimed in any preceding claim, **characterised in that** the body (2) of the coupling member (1) comprises splines (12) arranged on an inner circumferential surface (4) and oriented along the axis (O).

12. Mechanism (30) according to claim 1, **characterised in that** the first and second gear wheels (37, 38, 39, 40) have straight teething.

13. Method for transmitting power in a turbomachine by means of a power transmission mechanism (30) for a turbomachine (100), with the mechanism comprising:
- a reduction gear (31) comprising a first gear (32) and a second gear (33) having different reduction ratios and each comprising a first gear wheel (37, 38) mounted so as to be able to rotate freely on the same first axis (34) and a second gear wheel (39, 40) mounted on the same second axis (35), and
- a coupling member (1) mounted so as to rigidly rotate with and slide axially on the first axis (34), the coupling member (1) comprising first and second rows (6, 7) of helical coupling teeth (8) intended to cooperate with complementary helical meshing projections (47, 48) of the first gear wheels (37, 38), the helical coupling teeth (8) of the first and second rows (6, 7) of the coupling member (1) being respectively oriented opposite and essentially parallel to first and second directions (D1, D2)
wherein the method comprises the following steps:
- transmission of a first torque on the second axis (34) in such a way as to drive the first axis (34) via the coupling member (1) which occupies a first axial position wherein the latter is engaged with the first gear wheel (37) of the first gear (32);
- displacement of the coupling member (1) from the first position to a second axial driving position as soon as a second torque applied to the first axis exceeds the first torque;
- transmission of a second torque on the first axis (34) in such a way as to drive the second axis (35) via the coupling member (1) which occupies a second axial position wherein the latter meshes with the first gear wheel of the second gear,
the helical coupling teeth (8) and the helical meshing projections (47, 48) being configured to form a surface contact in the first and second axial positions, the helical meshing projections comprising first and second surfaces with inclinations that are respectively identical to those of a first surface and of a second surface of the helical coupling teeth facing one another.

14. Turbomachine comprising a reversible electrical machine (50), a gearbox (109) and a power transmission mechanism according to any of claims 1 to 12 connecting the electrical machine and the gearbox.

15. Turbomachine as claimed in the preceding claim, **characterised in that** the electrical machine is a variable frequency starter-generator.
